# EUROPÄISCHE PATENTSCHRIFT

(11) **EP 3 297 813 B1**
(45) Veröffentlichungstag und Bekanntmachung des Hinweises auf die Patenterteilung: **15.04.2020**
(21) Anmeldenummer: 16739413.9
(22) Anmeldetag: 14.07.2016
(51) Int. Cl.: B29C 67/00, B22F 3/105, B33Y 10/00, B33Y 30/00, B33Y 50/02

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCÉDÉ ET DISPOSITIF DE FABRICATION D'UN OBJET TRIDIMENSIONNEL

(30) Priorität: 14.07.2015 DE 102015213140
(43) Veröffentlichungstag der Anmeldung: 28.03.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE)
(74) Vertreter: Prüfer & Partner mbB Patentanwälte · Rechtsanwälte
(86) Internationale Anmeldenummer: PCT/EP2016/001230
(87) Internationale Veröffentlichungsnummer: WO 2017/008911

(56) Entgegenhaltungen:
- EP-A1- 1 568 472
- DE-A1-102012 212 587

## Beschreibung

Die vorliegende Erfindung bezieht sich auf ein Verfahren und eine Vorrichtung zum Herstellen eines dreidimensionalen Objekts durch schichtweises Aufbringen und selektives Verfestigen eines pulverförmigen Aufbaumaterials.

Verfahren und Vorrichtungen dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

DE 10 2012 212 587 beschreibt eine Vorrichtung und ein Verfahren zum schichtweisen Herstellen eines dreidimensionalen Objekts durch Lasersintern, bei dem eine zu verfestigende Schicht in Form von zwei nacheinander aufgebrachter Teilschichten erzeugt wird, wobei zwischen den Schritten des Aufbringens der zwei Pulverteilschichten zumindest in einem Randbereich des herzustellenden Objekts kein Einbringen von Energie zum selektiven Verfestigen des pulverförmigen Aufbaumaterials erfolgt.

EP 1 568 472 A1 beschreibt ein Verfahren zur schichtweisen Herstellung eines dreidimensionalen Objektes, bei dem jede zu verfestigende Stelle mehrfach bestrahlt wird.

Die Aufgabe der vorliegenden Erfindung besteht darin, ein verbessertes Verfahren bzw. eine verbesserte Vorrichtung zum Herstellen eines dreidimensionalen Objekts durch schichtweises Aufbringen und selektives Verfestigen eines pulverförmigen Aufbaumaterials bereitzustellen.

Die Aufgabe wird gelöst durch ein Verfahren gemäß Anspruch 1, ein Computerprogramm gemäß Anspruch 11, eine Steuereinheit gemäß Anspruch 12 oder eine Vorrichtung gemäß Anspruch 13. Weiterbildungen der Erfindung sind jeweils in den Unteransprüchen angegeben. Dabei können das Verfahren und das Computerprogramm auch durch die untenstehenden bzw. in den Unteransprüchen ausgeführten Merkmale der Steuereinheit oder der Vorrichtung weitergebildet sein oder jeweils umgekehrt.

Das erfindungsgemäße Verfahren zum Herstellen eines dreidimensionalen Objekts durch schichtweises Aufbringen und selektives Verfestigen eines pulverförmigen Aufbaumaterials enthält die Schritte des Aufbringens einer Schicht des pulverförmigen Aufbaumaterials mittels eines über eine Arbeitsebene fahrenden Beschichters und des selektiven Verfestigens der aufgebrachten Pulverschicht an Stellen, die einem Querschnitt des herzustellenden Objekts entsprechen, durch Einbringen von Energie mittels eines Belichters, der eine zum Verfestigen des Aufbaumaterials geeignete Strahlung aussendet. Die Schritte des Aufbringens und des selektiven Verfestigens werden wiederholt, bis das Objekt fertiggestellt ist. Der Schritt des Aufbringens wird für zumindest eine Schicht, bevorzugt eine Mehrzahl von Schichten und in besonders bevorzugter Weise für alle Schichten so durchgeführt, dass der Beschichter zumindest zweimal über eine zu beschichtende Fläche fährt, ohne dass zwischendurch ein Einbringen von Energie mittels des Belichters erfolgt. Der Schritt des selektiven Verfestigens wird für zumindest eine Schicht, bevorzugt eine Mehrzahl von Schichten und in besonders bevorzugter Weise für alle Schichten so durchgeführt, dass der Belichter zumindest (bevorzugt: genau) zweimal über eine zu belichtende Fläche fährt, ohne dass zwischendurch neues Aufbaumaterial aufgetragen wird. Vorzugsweise ist der Belichter als Zeilenbelichter ausgebildet.

Der Belichter fährt also mindestens zweimal über die zu belichtende Fläche, wobei er bei mindestens einer seiner beiden Fahrten, bevorzugt bei beiden, Energie einbringt.

Die Erfindung kombiniert also einen mindestens zweimal über die zu beschichtende Fläche fahrenden Beschichter mit einem ebenfalls zweimal über die zu belichtende Fläche fahrenden Belichter. Jede dieser beiden Komponenten (Beschichter und Belichter) ist dabei in seiner Fahrbewegung mit der Fahrbewegung der jeweils anderen Komponente koordiniert. Dies erfolgt erfindungsgemäß dadurch, dass zwischen den beiden Überfahrten des Beschichters keine Energieeinbringung mittels des Belichters erfolgt. Der Begriff "zwischendurch" ist in diesem Zusammenhang örtlich bezogen. Er bedeutet, dass an jedem beliebigen Ort, über den der Beschichter fährt, erst die zweifache Überfahrt des Beschichters erfolgt, bevor dort Energie mittels des Belichters eingebracht wird.

Die koordinierten Fahrbewegungen der beiden Komponenten können insbesondere dadurch realisiert sein, dass die beiden relativ zueinander jeweils in derselben Anordnung hintereinander stehen, was bedeutet, dass der Beschichter immer links des Belichters positioniert ist oder alternativ der Belichter immer links des Beschichters. Hierdurch ist ein Verfahren der beiden Komponenten besonders unkompliziert zu realisieren; die beiden stehen sich bei ihrer jeweiligen Verfahrbewegung nie im Weg.

Vorzugsweise bringt der Beschichter bei seinem ersten Verfahren über die zu beschichtende Fläche eine erste Pulverteilschicht auf und bei seinem zweiten Verfahren eine zweite Pulverteilschicht.

Dadurch kann unter Anderem die vertikale Temperaturverteilung innerhalb einer Schicht homogenisiert und darüber die Bauteilqualität verbessert werden.

Vorzugsweise wird vor dem Verfahren des Beschichters über die Arbeitsebene die Höhe des Beschichters über der Arbeitsebene, d. h. sein Abstand von der Arbeitsebene, verändert.

Dadurch kann die gewünschte Schichtdicke der aufgebrachten Pulverschicht eingestellt werden.

Allgemein umfasst die Erfindung daher auch ein Verfahren zum Herstellen eines dreidimensionalen Objekts durch schichtweises Aufbringen und selektives Verfestigen eines pulverförmigen Aufbaumaterials mit den Schritten: Aufbringen einer Schicht des pulverförmigen Aufbaumaterials mittels eines über eine Arbeitsebene fahrenden Beschichters, selektives Verfestigen der aufgebrachten Pulverschicht an Stellen, die einem Querschnitt des herzustellenden Objekts entsprechen, und Wiederholen der Schritte des Aufbringens und des selektiven Verfestigens, bis das Objekt fertiggestellt ist, wobei der Beschichter vor dem Aufbringen einer Schicht um eine vorbestimmte Höhe angehoben und/oder abgesenkt wird.

Vorzugsweise wird der Schritt des selektiven Verfestigens für zumindest eine Schicht, bevorzugt eine Mehrzahl von Schichten und in besonders bevorzugter Weise für alle Schichten so durchgeführt, dass das Einbringen von Energie mittels des Belichters zumindest zweimal erfolgt (nämlich insbesondere einmal während seiner erste Fahrt und einmal bei seiner zweiten Fahrt), ohne dass zwischendurch neues Aufbaumaterial aufgetragen wird. Auch in diesem Zusammenhang ist der Begriff "zwischendurch" örtlich bezogen. Er bedeutet, dass an jedem beliebigen Ort, über den der Belichter fährt, erst die zweifache Überfahrt des Belichters erfolgt, bevor dort neues Aufbaumaterial mittels des Beschichters aufgetragen wird.

Dadurch ist es beispielsweise auf einfache Weise möglich, die Wirkungen von Doppelbeschichtung und Doppelbelichtung miteinander zu verbinden, wobei dies koordiniert erfolgt und sichergestellt wird, dass an jeder Stelle einer Schicht des Aufbaumaterials zuerst (insbesondere doppelt) beschichtet und dann doppelt belichtet wird. Für jeden doppelt belichteten Ort ist also sichergestellt, dass dort zuvor auch (insbesondere doppelt) beschichtet wurde.

Vorzugsweise wird vor dem Verfahren des Belichters über die Arbeitsebene die Höhe, d. h. der Abstand, des Belichters über (bzw. relativ zu) der Arbeitsebene verändert.

Dadurch kann die Fokusebene des Belichters an die momentane Höhe (d. h. Ebene) der zu belichtenden Schicht angepasst werden.

Damit umfasst die Erfindung auch ein Verfahren zum Herstellen eines dreidimensionalen Objekts durch schichtweises Aufbringen und selektives Verfestigen eines pulverförmigen Aufbaumaterials mit den Schritten: Aufbringen einer Schicht des pulverförmigen Aufbaumaterials mittels eines über eine Arbeitsebene fahrenden Beschichters, selektives Verfestigen der aufgebrachten Pulverschicht an Stellen, die einem Querschnitt des herzustellenden Objekts entsprechen, mittels eines über die Arbeitsebene fahrenden Belichters und Wiederholen der Schritte des Aufbringens und des selektiven Verfestigens, bis das Objekt fertiggestellt ist, wobei der Belichter vor seinem Verfahren über die Arbeitsebene angehoben und/oder abgesenkt wird.

Bevorzugt heizt der Belichter bei seinem ersten Verfahren über die zu belichtende Fläche das Aufbaumaterial vor, ohne es zu verfestigen, und bei seinem zweiten Verfahren über die zu belichtende Fläche verfestigt er das Aufbaumaterial an den dem Querschnitt des herzustellenden Objekts entsprechenden Stellen verfestigt.

Dadurch kann beispielsweise eine getrennte Heizvorrichtung für die aufgebrachte Pulverschicht überflüssig werden, oder ihre Heizwirkung kann unterstützt werden.

Bei einer solchen Vorheizung kann beispielsweise an den dem Querschnitt des herzustellenden Objekts entsprechenden Stellen vorgeheizt werden, es können jedoch auch (alternativ oder zusätzlich) Bereiche in der Fläche des Aufbaumaterials (insbesondere selektiv) vorbeheizt werden, speziell mit dem Zweck des Ausgleichs von Temperaturinhomogenitäten in der Fläche. So können Wärmesenken innerhalb der Fläche einfach ausgeglichen werden.

Vorzugsweise verfestigt der Belichter bei seinem ersten Verfahren über die zu belichtende Fläche das Aufbaumaterial an den dem Querschnitt des herzustellenden Objekts entsprechenden Stellen nur teilweise und bei seinem zweiten Verfahren über die zu belichtende Fläche das Aufbaumaterial an den dem Querschnitt des herzustellenden Objekts entsprechenden Stellen vollständig. Unter "teilweise Verfestigen" wird in diesem speziellen Zusammenhang verstanden, dass nur eine nicht ausreichende (Teil-) Energie an den dem Querschnitt des herzustellenden Objekts entsprechenden Stellen eingebracht wird. Diese (Teil-) Energie reicht also nicht aus, um das pulverförmige Aufbaumaterial so weitgehend auf- bzw. anzuschmelzen, dass es sich beim Abkühlprozess ausreichend (d. h. gewünscht) stark verfestigt. Das vollständige Verschmelzen erolgt somit beim zweiten Verfahren des Belichters mit Hilfe einer zusätzlichen (Teil-) Energie, so dass sich die beiden (Teil-) Energien im Wesentlichen addieren und mindestens der Energie entsprechen, die zum vollständigen Verfestigen des pulverförmigen Aufbaumaterials in einem Belichtungsvorgang notwendig ist.

Dadurch kann also die zum vollständigen Verfestigen des Aufbaumaterials erforderliche Energie auf zwei Teilbelichtungen aufgeteilt werden.

Vorzugsweise werden der Beschichter und der Belichter so verfahren, dass zeitgleich an verschiedenen Orten der Arbeitsebene ein Beschichtungsvorgang und ein Belichtungsvorgang stattfinden.

Dadurch kann die Prozessgeschwindigkeit erheblich erhöht und darüber die Herstellungszeit des Objekts verkürzt werden.

Das erfindungsgemäße Computerprogramm ist in eine programmierbare Steuereinheit ladbar und enthält Programmcodemitteln, um alle Schritte eines Verfahrens gemäß einem der Ansprüche 1 bis 10 auszuführen, wenn das Computerprogramm auf der Steuereinheit ausgeführt wird.

Dadurch ist es möglich, das erfindungsgemäße Verfahren programmgesteuert durchzuführen.

Die erfindungsgemäße Steuereinheit ist für eine Vorrichtung zum Herstellen eines dreidimensionalen Objekts durch selektives schichtweises Verfestigen von Aufbaumaterial vorgesehen, wobei die Vorrichtung einen über eine Arbeitsebene bewegbaren Beschichter zum Aufbringen einer Schicht des Aufbaumaterials auf die Arbeitsebene und einen Belichter zum selektiven Verfestigen der aufgebrachten Schicht an Stellen, die einem Querschnitt des herzustellenden Objekts entsprechen, durch Einbringen von Energie mittels des Belichters umfasst. Die Steuereinheit ist ausgebildet, die Vorrichtung so zu steuern, dass sie die Schritte des Aufbringens und des selektiven Verfestigens wiederholt, bis das Objekt fertiggestellt ist, den Schritt des Aufbringens für zumindest eine Schicht, bevorzugt eine Mehrzahl von Schichten und in besonders bevorzugter Weise für alle Schichten so durchführt, dass der Beschichter zumindest zweimal über eine zu beschichtende Fläche fährt, ohne dass zwischendurch ein Einbringen von Energie mittels des Belichters erfolgt, und den Schritt des selektiven Verfestigens mittels eines zumindest zweimal über die zu belichtende Fläche fahrenden Belichters durchführt, der eine zum Verfestigen des Aufbaumaterials geeignete Strahlung aussendet.

Dadurch wird in eine Steuereinheit bereitgestellt, die in der Lage ist, eine Vorrichtung zum Herstellen eines dreidimensionalen Objekts so zu steuern, dass sie das erfindungsgemäße Verfahren durchführt.

Die erfindungsgemäße Vorrichtung zum Herstellen eines dreidimensionalen Objekts durch selektives schichtweises Verfestigen von Aufbaumaterial umfasst einen über eine Arbeitsebene bewegbaren Beschichter zum Aufbringen einer Schicht des Aufbaumaterials auf die Arbeitsebene und einen Belichter zum selektiven Verfestigen der aufgebrachten Schicht an Stellen, die einem Querschnitt des herzustellenden Objekts entsprechen, durch Einbringen von Energie mittels des Belichters. Die Vorrichtung ist ausgebildet und/oder gesteuert, die Schritte des Aufbringens und des selektiven Verfestigens zu wiederholen, bis das Objekt fertiggestellt ist, den Schritt des Aufbringens für zumindest eine Schicht, bevorzugt eine Mehrzahl von Schichten und in besonders bevorzugter Weise für alle Schichten so durchzuführen, dass der Beschichter zumindest zweimal über eine zu beschichtende Fläche fährt, ohne dass zwischendurch ein Einbringen von Energie mittels des Belichters erfolgt, und den Schritt des selektiven Verfestigens mittels eines zumindest zweimal über die zu belichtende Fläche fahrenden Belichters durchzuführen, der eine zum Verfestigen des Aufbaumaterials geeignete Strahlung aussendet.

Dadurch wird in eine Vorrichtung bereitgestellt, die in der Lage ist, das erfindungsgemäße Verfahren durchzuführen.

Vorzugsweise ist der Belichter getrennt von dem Beschichter über die Arbeitsebene verfahrbar.

Dadurch können beispielsweise Doppelbeschichtung und Doppelbelichtung auf einfache Weise miteinander kombiniert werden, ohne sich gegenseitig zu stören.

Vorzugsweise ist der Belichter gemeinsam mit dem Beschichter über die Arbeitsebene verfahrbar.

Dadurch können die Belichtungsvorrichtung und der Beschichter gleichzeitig arbeiten, was die Prozessgeschwindigkeit erhöht und darüber die Herstellungszeit des Objekts verkürzt.

Weitere Merkmale und Zweckmäßigkeiten der Erfindung ergeben sich aus der Beschreibung von Ausführungsbeispielen anhand der beigefügten Zeichnungen. Die Figuren sind nicht zwangläufig maßstäblich zu verstehen. Insbesondere kann es sein, dass Schichtdicken variieren, je nachdem, ob es sich um unverfestigte oder verfestigte Bereiche handelt.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen eines erfindungsgemäßen Verfahrens geeignet ist.
- Fig. 2a: bis d sind schematische Darstellungen eines Ablaufs eines Verfahrens gemäß einer ersten Ausführungsform der vorliegenden Erfindung.
- Fig. 3a: und b sind schematische Darstellungen eines Ablaufs eines Verfahrens gemäß einer zweiten Ausführungsform der vorliegenden Erfindung.

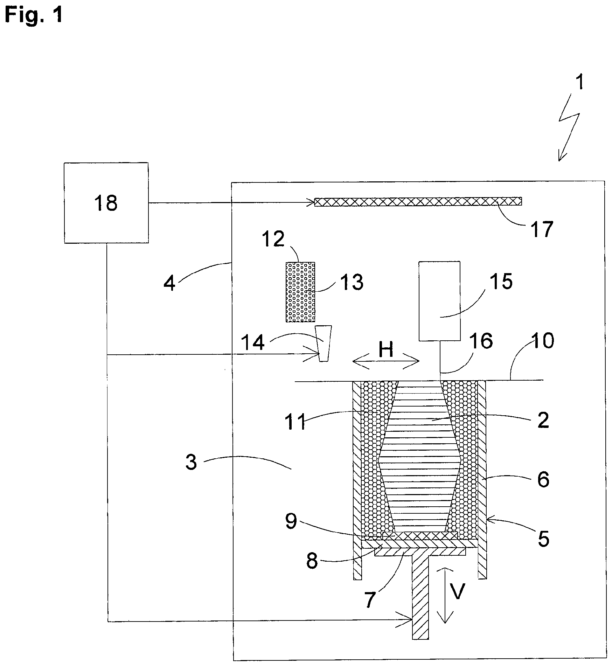

Im Folgenden wird mit Bezug auf Fig. 1 ein Ausführungsbeispiel einer Vorrichtung 1 beschrieben, die zum Durchführen eines erfindungsgemäßen Verfahrens geeignet ist. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10, die durch den oberen Rand des Behälters definiert ist, in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. Vorzugsweise erstreckt sich der Beschichter 14 quer zu seiner Bewegungsrichtung über den ganzen zu beschichtenden Bereich.

Die Lasersintervorrichtung 1 enthält ferner einen ebenfalls in einer horizontalen Richtung H bewegbaren Belichter 15, der eine Laserstrahlung 16 erzeugt, die auf die Arbeitsebene 10 fokussiert wird. Der Belichter 15 ist vorzugsweise als Zeilenbelichter ausgebildet, der in der Lage ist, eine sich quer zu seiner Bewegungsrichtung erstreckende Linie zu belichten, die sich über den gesamten zu belichtenden Bereich erstreckt.

In der Prozesskammer ist ferner eine Strahlungsheizung 17 zum Vorheizen einer aufgebrachten Schicht vor deren Verfestigung angeordnet. Die Strahlungsheizung ist beispielsweise als Infrarotstrahler ausgebildet.

Weiter enthält die Lasersintervorrichtung 1 eine Steuereinheit 18, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit 18 geladen werden kann. Im Betrieb wird zum Aufbringen einer Pulverschicht zunächst der Träger 7 um eine Höhe abgesenkt, die der gewünschten Schichtdicke entspricht. Durch Verfahren des Beschichters 14 über die Arbeitsebene 10 wird dann eine Schicht des pulverförmigen Aufbaumaterials 13 aufgebracht. Das Aufbringen erfolgt zumindest über den gesamten Querschnitt des herzustellenden Objekts 2, vorzugsweise über das gesamte Baufeld, also den Bereich der Arbeitsebene 10, der innerhalb der oberen Öffnung des Behälters liegt. Die aufgebrachte Pulverschicht wird durch die Strahlungsheizung 17 vorgeheizt. Anschließend verfährt der Belichter über die aufgebrachte und vorgeheizte Pulverschicht und verfestigt das pulverförmige Aufbaumaterial 13 an den Stellen, die dem Querschnitt des herzustellenden Objekts 2 entsprechen, indem er selektiv diese Stellen mit der Laserstrahlung belichtet. Diese Schritte werden solange wiederholt, bis das Objekt 2 fertiggestellt ist und dem Bauraum entnommen werden kann.

Gemäß der vorliegenden Erfindung erfolgen die Schritte des Aufbringens und Verfestigens so, dass zunächst der Beschichter zweimal über eine zu beschichtende Fläche fährt, ohne dass zwischendurch belichtet wird, und dass anschließend der Belichter zweimal über die zu belichtende Fläche fährt.

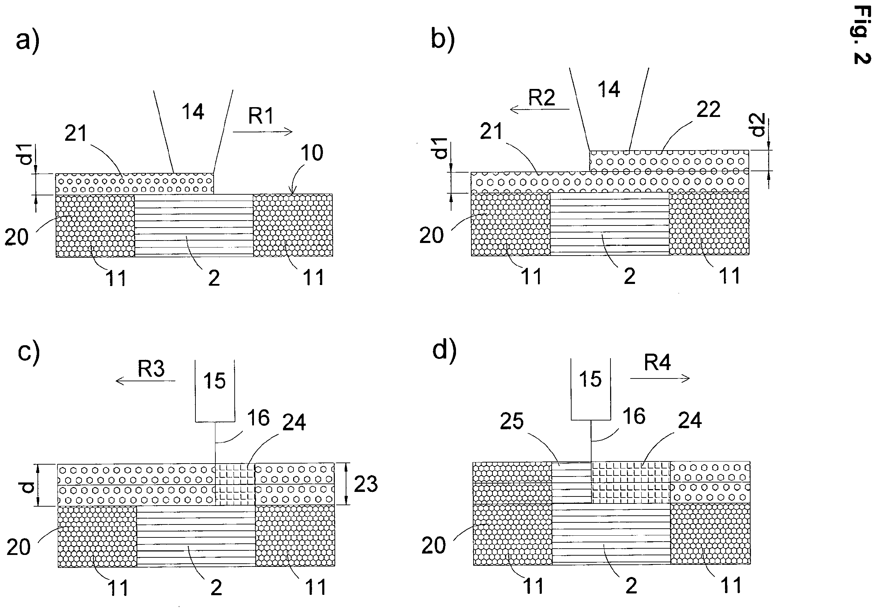

Fig. 2 zeigt schematisch einen Ablauf eines Verfahrens gemäß einer ersten Ausführungsform der vorliegenden Erfindung. In den Figuren 2a bis 2b ist jeweils schematisch ein Ausschnitt des in der Arbeitsebene 10 liegenden Baufelds im Schnitt dargestellt.

Nach dem Aufbringen und selektiven Verfestigen einer Pulverschicht 20 ist der darin liegende verfestigte Bereich, der einen Teil des herzustellenden Objekts 2 bildet, von unverfestigt gebliebenem Pulver 11 umgeben. Zu Beginn des in Fig. 2a gezeigten Schritts ist der Beschichter 14 links des Baufelds 10 angeordnet, der Belichter 15 rechts.

Zunächst wird der Träger 7 um eine Höhe d1 abgesenkt. Dann wird wie in Fig. 2a gezeigt auf die zuvor aufgebrachte und selektiv verfestigte Pulverschicht 20 mittels einer Bewegung des Beschichters 14 in einer ersten Beschichtungsrichtung R1 über das Baufeld 10 eine erste Pulverschicht 21 des Aufbaumaterials 13 mit einer ersten Dicke d1 aufgebracht.

Nach dem Aufbringen der ersten Pulverschicht 21 wird der Träger 7 um eine Höhe d2 abgesenkt. Anschließend wird der Beschichter 14 wie in Fig. 2b gezeigt in eine zweite Beschichtungsrichtung R2 bewegt, die vorzugsweise der ersten Beschichtungsrichtung R1 entgegengesetzt ist. Dabei bringt er eine zweite Pulverschicht 22 des Aufbaumaterials 13 mit einer zweiten Dicke d2 auf.

Dadurch entsteht insgesamt eine zu verfestigende Pulverschicht 23, deren Dicke d gleich der Summe aus der ersten Dicke d1 und der zweiten Dicke d2 ist. Die erste und die zweite Pulverschicht 21, 22 sind sozusagen nur Pulverteilschichten der einen, gemeinsam zu verfestigenden Pulvergesamtschicht 23.

Während und nach dem Aufbringen der ersten und der zweiten Pulverteilschicht 21, 22 wird das aufgebrachte Pulver durch die Strahlungsheizung 17 vorgeheizt.

Erst nachdem der Beschichter 14 zweimal über das Baufeld 10 gefahren ist und die beiden Pulverteilschichten 21, 22 aufgebracht hat, ohne dass zwischendurch belichtet wurde, fährt der Belichter wie in Fig. 2c gezeigt in einer ersten Belichtungsrichtung R3, die vorzugsweise gleich der zweiten Beschichtungsrichtung R2 ist, über das Baufeld und belichtet selektiv die aufgebrachte Pulvergesamtschicht 23. Dabei ist die Menge der durch die Laserstrahlung 16 eingebrachten Energie so eingestellt, dass keine vollständige Verfestigung des pulverförmigen Aufbaumaterials 13 erfolgt. Dadurch wird in der aufgebrachten Pulvergesamtschicht 23 je nach der Struktur des aufzubauenden Objekts 2 oder nach der Anzahl gleichzeitig aufzubauender Objekte 2 zumindest ein teilweise verfestigter Pulverbereich 24 gebildet.

Nach der ersten Teilbelichtung fährt der Belichter wie in Fig. 2d gezeigt in einer zweiten Belichtungsrichtung R4, die vorzugsweise gleich der ersten Beschichtungsrichtung R1 ist, über das Baufeld und belichtet selektiv die aufgebrachte Pulvergesamtschicht 23. Dabei ist die Menge der durch die Laserstrahlung 16 eingebrachten Energie so eingestellt, dass an den dem Querschnitt des herzustellenden Objekts 2 entsprechenden Stellen eine vollständige Verfestigung des pulverförmigen Aufbaumaterials 13 erfolgt. Dadurch wird in der aufgebrachten Pulvergesamtschicht 23 ein vollständig verfestigter Pulverbereich 25 gebildet, der bereits Teil des aufzubauenden Objekts ist und sich im Verlauf der zweiten Teilbelichtung auf den gesamten Querschnitt des herzustellenden Objekts 2 bzw. der herzustellenden Objekte erweitert, während außerhalb des Objekts 2 unverfestigtes Aufbaumaterial 11 verbleibt.

Damit ist der Ausgangszustand erreicht, der Träger wird erneut um d1 abgesenkt, und die oben beschriebenen Schritte werden wiederholt, beginnend mit dem in Fig. 2a gezeigten Schritt.

Anstelle des zweimaligen Absenkens des Trägers 7 jeweils um d1 und d2 kann der Träger auch nur einmal um die Gesamthöhe d=d1+d2 abgesenkt werden. Dann muss jedoch der Beschichter 14 nach dem Aufbringen jeder Pulverteilschicht angehoben bzw. abgesenkt werden. Beispielsweise wird vor dem in Fig. 2a gezeigten Schritt nicht der Träger 7 um d1 abgesenkt, sondern der Beschichter 14 um d1 angehoben, so dass er die erste Pulverteilschicht 21 mit der Dicke d1 aufbringt. Zwischen den in Fig. 2a und 2b gezeigten Schritten wird dann der Träger 7 um d=d1+d2 abgesenkt, und der Beschichter 14 wird um d1 abgesenkt, um die zweite Pulverteilschicht 22 mit der Dicke d2 aufzubringen. Vor dem nächsten in Fig. 2a gezeigten Schritt muss der Beschichter 14 wieder um d1 angehoben werden, damit er im nächsten Durchlauf wieder die erste Pulverteilschicht 21 mit der Dicke d1 aufbringen kann.

Für den Belichter 15 ist in dieser Ausführungsform keine Höhenverstellung erforderlich, da die Oberfläche der Pulvergesamtschicht 23 bei beiden Durchfahrten des Belichters 15 auf derselben Höhe liegt.

Bei diesem Verfahren wird also abwechselnd eine Doppelbeschichtung (Fig. 2a, 2b, Auftragen von zwei Teilschichten, ohne zwischendurch zu belichten) und eine Doppelbelichtung (Fig. 2c, 2d, zweimalige Teilbelichtung, ohne zwischendurch zu beschichten) durchgeführt.

Dadurch können die Vorteile einer Doppel- oder Mehrfachbeschichtung und einer Doppel- oder Mehrfachbelichtung auf einfache Weise miteinander kombiniert werden.

Doppel- oder Mehrfachbeschichtung, also das Aufbringen einer zu verfestigenden Schicht des pulverförmigen Aufbaumaterials in Form von zwei oder mehr nacheinander aufgebrachten Teilschichten, ohne zwischendurch zu belichten, ermöglicht es, eine homogenere Temperaturverteilung über die Dicke der aufgebrachten Schicht zu erzielen als beim Aufbringen einer einzigen Schicht mit entsprechender Gesamtdicke. Dadurch können die mechanischen Eigenschaften des hergestellten Objekts verbessert werden. Unter anderem kann die Oberflächenqualität verbessert werden, und es können Einfallstellen (Orangenhaut) vermieden werden.

Doppel- oder Mehrfachbelichtung, also das Verfestigen einer zu verfestigenden Schicht des pulverförmigen Aufbaumaterials in Form von zwei oder mehr nacheinander durchgeführten Teilbelichtungen, kann ebenfalls die Qualität der hergestellten Objekte verbessern:
Die einfachste Möglichkeit besteht darin, die zum vollständigen Verfestigen des pulverförmigen Aufbaumaterials erforderliche Energie auf zwei Portionen aufzuteilen, die nacheinander in die Schicht eingebracht werden. Insgesamt ist es durch die Doppelbelichtung möglich, größere Energiemengen als bei einer Einzelbelichtung in die Schicht einzubringen. Aber auch bei einer Aufteilung einer Energiemenge, die durch ein Einzelbelichtung erbracht werden könnte, ergeben sich durch die Aufteilung in zwei Portionen Vorteile, beispielsweise bezüglich der Temperaturverteilung in der Schicht und einer daraus resultierenden besseren Qualität der hergestellten Objekte.

Alternativ zu der oben beschriebenen teilweisen oder vollständigen Verfestigung des pulverförmigen Aufbaumaterials können durch die erste Teilbelichtung aber auch andere Wirkungen erzielt werden.

So kann der Belichter beispielsweise bei seinem ersten Verfahren über die zu belichtende Fläche das Aufbaumaterial vorheizen, ohne es zu verfestigen, und bei seinem zweiten Verfahren das Aufbaumaterial an den dem Querschnitt des herzustellenden Objekts entsprechenden Stellen verfestigen. Das Vorheizen kann alternativ oder zusätzlich zu dem Vorheizen mittels der Strahlungsheizung erfolgen. Dabei kann z.B. die gesamte aufgebrachte Schicht durch den Belichter vorgeheizt werden, wobei durch die Steuerung der Belichtung auch die Temperaturverteilung über die Schicht gesteuert werden kann. Alternativ kann auch nur der zu verfestigende Bereich oder nur der nicht zu verfestigende Bereich vorgeheizt werden, wobei auch ein Abstand zu der Außenkontur des zu verfestigenden Bereichs gehalten oder ein über diese hinaus gehender Rand mitbeheizt werden kann.

Alternativ kann der Belichter beispielsweise bei seinem ersten Verfahren über die zu belichtende Fläche eine Absorptionsfähigkeit des Aufbaumaterials verändern und bei seinem zweiten Verfahren das Aufbaumaterial nur an den stärker absorbierenden Stellen verfestigen. Dazu braucht die zweite Teilbelichtung nicht einmal selektiv zu sein.

In dem in Fig. 2c gezeigten Schritt fährt der Belichter 15 vorzugsweise in derselben Richtung R3=R2 über das Baufeld, in der vorher in dem Fig. 2b gezeigten Schritt der Beschichter 14 über das Baufeld gefahren ist. Außerdem fährt der Beschichter 14 in dem in Fig. 2a gezeigten Schritt vorzugsweise in derselben Richtung R1=R4 über das Baufeld, in der vorher in dem Fig. 2d gezeigten Schritt der Belichter 15 über das Baufeld gefahren ist. Dabei ist es nicht erforderlich, dass jeweils das eine Modul wartet, bis das andere vollständig über das Baufeld gefahren ist, sondern beide Module können auch zumindest zeitweise gleichzeitig über das Baufeld verfahren werden.

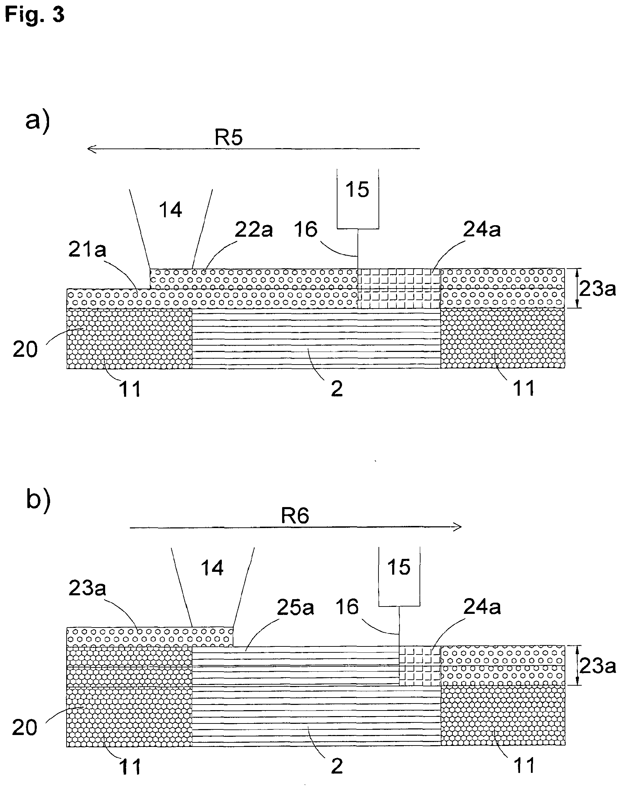

Fig. 3 zeigt schematisch einen Ablauf eines Verfahrens gemäß einer zweiten Ausführungsform der vorliegenden Erfindung, die sich von der ersten Ausführungsform darin unterscheidet, dass der Beschichter 14 und der Belichter 15 gemeinsam über das Baufeld verfahren werden anstatt getrennt voneinander. Alle anderen Merkmale der ersten Ausführungsform können auch auf die zweite Ausführungsform übertragen werden.

Fig. 3a zeigt einen Verfahrensschritt, bei dem die in Fig. 2b und Fig. 2c gezeigten Verfahrensschritte miteinander kombiniert werden. Der Beschichter 14 hat in einem früheren Verfahrensschritt bereits eine erste Pulverteilschicht 21a aufgetragen und verfährt nun in einer ersten Fahrtrichtung R5 über das Baufeld, um eine zweite Pulverteilschicht 22a aufzutragen. Hinter dem Beschichter 14 bilden die erste Pulverteilschicht 21a und die zweite Pulverteilschicht 22a gemeinsam bereits eine selektiv zu verfestigende Pulvergesamtschicht 23a.

Noch während der Beschichter 14 zum Auftragen der zweiten Pulverteilschicht 22a über das Baufeld verfährt, fährt im Abstand dahinter bereits der Belichter 15 ebenfalls in der ersten Fahrtrichtung R5 über den bereits fertig aufgetragenen Bereich der Pulvergesamtschicht 23a und belichtet diesen selektiv. Auch hierbei ist die Menge durch die Laserstrahlung 16 eingebrachten Energie vorzugsweise so eingestellt, dass keine vollständige Verfestigung des pulverförmigen Aufbaumaterials 13 erfolgt, wodurch in der Pulvergesamtschicht 23a ein teilweise verfestigter Pulverbereich 24a gebildet wird.

Der Abstand zwischen Beschichter 14 und Belichter 15 ist vorzugsweise so gewählt, dass das zwischen ihnen liegende Pulver durch die Strahlungsheizung 17 in der Zwischenzeit zwischen dem Aufbringen und dem Belichten hinreichend vorgeheizt werden kann.

Nachdem der Belichter zumindest über den gesamten zu belichtenden Bereich, vorzugsweise das gesamte Baufeld verfahren ist, verfährt er in einer zweiten Fahrtrichtung R6, die vorzugsweise der ersten Fahrtrichtung R5 entgegengesetzt ist, erneut über das Baufeld und führt eine zweite Teilbelichtung durch, wie sie oben mit Bezug auf Fig. 2d beschrieben ist. Dadurch entsteht in der Pulvergesamtschicht 23a ein vollständig verfestigter Pulverbereich 25a, der bereits Teil des aufzubauenden Objekts 2 ist und sich im Verlauf der zweiten Teilbelichtung auf den gesamten Querschnitt des herzustellenden Objekts 2 erweitert, während außerhalb des Objekts 2 unverfestigtes Aufbaumaterial 11 verbleibt.

Noch während der Belichter 15 zum Durchführen der zweiten Teilbelichtung über das Baufeld verfährt, fährt im Abstand dahinter bereits der Beschichter 14 über den bereits fertig belichteten Bereich der Pulvergesamtschicht 23a und bringt eine weitere erste Pulverschicht 21b für die nächste Pulvergesamtschicht auf.

Der Abstand zwischen Belichter 15 und Beschichter 14 ist beispielsweise so gewählt, dass das Aufbringen der ersten Pulverteilschicht 21b weder das Verfestigen der durch die Laserstrahlung 16 erhitzten Bereiche der Pulvergesamtschicht 23a stört, noch das neu aufgebrachte Pulver durch die noch heißen verfestigten Bereiche 25a der Pulvergesamtschicht 23a nachteilig beeinflusst wird.

Nachdem der Beschichter 14 zumindest über den gesamten zu belichtenden Bereich, vorzugsweise das gesamte Baufeld verfahren ist, ist der Ausgangszustand erreicht und, das oben beschriebene Verfahren wird wiederholt, beginnend mit dem in Fig. 3a gezeigten Schritt.

Wenn in der vorliegenden Ausführungsform der Träger 7 zum Aufbringen der Pulverteilschichten 21, 22 jeweils um d1 bzw. d2 abgesenkt wird, ergibt sich das Problem, dass die Oberfläche der Pulvergesamtschicht 23a bei beiden Durchfahrten des Belichters 15 auf unterschiedlichen Höhen liegt und der Fokus für die Laserstrahlung nachgestellt werden müsste.

Daher wird in der vorliegenden Ausführungsform vorzugsweise der Träger 7 nur vor dem in Fig. 3a gezeigten Schritt um die Gesamthöhe d=d1+d2 abgesenkt. Der Beschichter 14 wird vor dem in Fig. 3b gezeigten Schritt um d1 angehoben und nach diesem Schritt wieder um d1 abgesenkt. Damit erfolgt das Aufbringen der Pulverteilschichten 21, 22 jeweils mit den Dicken d1, d2. Andererseits bleibt dabei die Höhenlage der der Pulvergesamtschicht 23a bei beiden Durchfahrten des Belichters 15 gleich, so dass keine Nachstellung des Fokus erforderlich ist.

Alternativ dazu kann der Träger für beide Pulverteilschichten 21, 22 um die jeweilige Dicke d1, d2 abgesenkt werden und der Beschichter in seiner Höheneinstellung unverändert bleiben. Dann wird vorzugsweise der Belichter vor dem in Fig. 3a gezeigten Schritt um d1 angehoben und vor dem in Fig. 3b gezeigten Schritt um d1 abgesenkt.

Auch eine beliebige Kombination dieser Vorgehensweisen ist möglich, um sicherzustellen, dass einerseits die gewünschten Schichtdicken aufgetragen werden und andererseits die Oberfläche der Pulvergesamtschicht immer in der Fokusebene der Laserstrahlung liegt.

Auch in der vorliegenden Ausführungsform wird also abwechselnd eine Doppelbeschichtung (linke Hälften von Fig. 3a, 3b, Auftragen von zwei Teilschichten, ohne zwischendurch zu belichten) und eine Doppelbelichtung (rechte Hälften von Fig. 3a, 3b, zweimalige Teilbelichtung, ohne zwischendurch zu beschichten) durchgeführt. Die Bezeichnung "zwischendurch" ist in diesem Fall auf jeden einzelnen Ort des Baufelds bezogen. An unterschiedlichen Orten kann in der vorliegenden Ausführungsform beispielsweise gleichzeitig eine Beschichtung und eine Belichtung erfolgen.

Daher können mit der zweiten Ausführungsform dieselben Wirkungen erzielt werden wie mit der ersten Ausführungsform. Zusätzlich kann eine Beschleunigung des Verfahrens erzielt werden, weil Beschichter und Belichter nicht nacheinander, sondern zumindest gleichzeitig über das Baufeld verfahren. Dadurch können die Herstellungszeit des Objekts und darüber dessen Kosten verringert werden.

Den oben beschriebenen Ausführungsformen ist gemeinsam, dass der Beschichter zumindest zweimal über eine zu beschichtende Fläche fährt, ohne dass zwischendurch ein Einbringen von Energie mittels des Belichters erfolgt, und dass das Einbringen von Energie mittels des Belichters zumindest zweimal erfolgt, ohne dass zwischendurch neues Pulver aufgetragen wird. Das erfindungsgemäße Verfahren kann beliebig abgewandelt werden, solange dieses Grundprinzip erfüllt ist. So können Belichter oder Beschichter auch mehr als zweimal über die zu beschichtende bzw. zu belichtende Fläche fahren, ohne dass zwischendurch belichtet bzw. beschichtet wird.

Gemäß den obigen Ausführungsformen werden zwei Pulverteilschichten mit den Dicken d1 und d2 aufgetragen. Diese Dicken können gleich oder voneinander verschieden sein. Es kann auch eine dieser Dicken Null sein, d.h. dass der Beschichter in diesem Fall eine Leerfahrt durchführt, ohne Pulver aufzubringen. Ebenso kann der Belichter eine Leerfahrt durchführen, ohne zu belichten.

In den obigen Ausführungsformen wurde beschrieben, dass der Beschichter 14 und/oder der Belichter 15 vor Beginn einer Teilbeschichtung bzw. einer Teilbelichtung, also jeweils vor ihrem Verfahren über die Arbeitsebene, angehoben oder abgesenkt werden kann.

Die vorliegende Erfindung muss nicht auf alle Schichten angewendet werden, aus denen ein Objekt gebildet wird. Sie wird aber für zumindest eine dieser Schichten durchgeführt, vorzugsweise für eine Mehrzahl von Schichten und in besonders bevorzugter Weise für alle Schichten.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials durch selektives Einbringen von Energie angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser) umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen.

Als Aufbaumaterial können verschiedene Arten von Pulver verwendet werden, insbesondere Metallpulver, Kunststoffpulver, Keramikpulver, Sand, gefüllte oder gemischte Pulver.

## Patentansprüche

1. Verfahren zum Herstellen eines dreidimensionalen Objekts (2) durch schichtweises Aufbringen und selektives Verfestigen eines pulverförmigen Aufbaumaterials (13) mit den Schritten:
Aufbringen einer Schicht (23) des pulverförmigen Aufbaumaterials (13) mittels eines über eine Arbeitsebene (10) fahrenden Beschichters (14),
selektives Verfestigen der aufgebrachten Pulverschicht (23) an Stellen, die einem Querschnitt des herzustellenden Objekts (2) entsprechen, durch Einbringen von Energie (16) mittels eines Belichters (15), der eine zum Verfestigen des Aufbaumaterials (13) geeignete Strahlung aussendet, und
Wiederholen der Schritte des Aufbringens und des selektiven Verfestigens, bis das Objekt (2) fertiggestellt ist,
wobei der Schritt des Aufbringens für zumindest eine Schicht, bevorzugt eine Mehrzahl von Schichten und in besonders bevorzugter Weise für alle Schichten so durchgeführt wird, dass der Beschichter (14) zumindest zweimal über eine zu beschichtende Fläche fährt, ohne dass zwischendurch ein Einbringen von Energie (16) mittels des Belichters (15) erfolgt, und
der Schritt des selektiven Verfestigens für zumindest eine Schicht, bevorzugt eine Mehrzahl von Schichten und in besonders bevorzugter Weise für alle Schichten so durchgeführt wird, dass der Belichter (15) zumindest zweimal über eine zu belichtende Fläche fährt, ohne dass zwischendurch neues Aufbaumaterial (13) aufgetragen wird.

2. Verfahren gemäß Anspruch 1, bei dem der Beschichter (14)
bei seinem ersten Verfahren über die zu beschichtende Fläche eine erste Pulverteilschicht (21) aufbringt und
bei seinem zweiten Verfahren über die zu beschichtende Fläche eine zweite Pulverteilschicht (22) aufbringt.

3. Verfahren gemäß einem der Ansprüche 1 bis 2, bei dem
vor dem Verfahren des Beschichters (14) über die Arbeitsebene (10) die Höhe des Beschichters (14) über der Arbeitsebene (10) verändert wird.

4. Verfahren gemäß einem der Ansprüche 1 bis 3, bei dem
der Schritt des selektiven Verfestigens für zumindest eine Schicht, bevorzugt eine Mehrzahl von Schichten und in besonders bevorzugter Weise für alle Schichten so durchgeführt wird, dass das Einbringen von Energie (16) mittels des Belichters (15) zumindest zweimal erfolgt, ohne dass zwischendurch neues Aufbaumaterial (13) aufgetragen wird.

5. Verfahren gemäß einem der Ansprüche 1 bis 4, bei dem
vor dem Verfahrens des Belichters (15) über die Arbeitsebene die Höhe des Belichters (10) über der Arbeitsebene verändert wird.

6. Verfahren gemäß einem der Ansprüche 1 bis 5, bei dem der Belichter (15)
bei seinem ersten Verfahren über die zu belichtende Fläche das Aufbaumaterial (13) vorheizt, ohne es zu verfestigen, und
bei seinem zweiten Verfahren über die zu belichtende Fläche das Aufbaumaterial (13) an den dem Querschnitt des herzustellenden Objekts (2) entsprechenden Stellen verfestigt.

7. Verfahren gemäß einem der Ansprüche 1 bis 5, bei dem der Belichter (15)
bei seinem ersten Verfahren über die zu belichtende Fläche das Aufbaumaterial (13) an den dem Querschnitt des herzustellenden Objekts (2) entsprechenden Stellen nur teilweise verfestigt und
bei seinem zweiten Verfahren über die zu belichtende Fläche das Aufbaumaterial (13) an den dem Querschnitt des herzustellenden Objekts (2) entsprechenden Stellen vollständig verfestigt.

8. Verfahren gemäß einem der Ansprüche 1 bis 7, bei dem
der Beschichter (14) und der Belichter (15) so verfahren werden, dass zeitgleich an verschiedenen Orten der Arbeitsebene ein Beschichtungsvorgang und ein Belichtungsvorgang stattfinden.

9. Verfahren zum Herstellen eines dreidimensionalen Objekts (2) nach einem der Ansprüche 1 bis 8,
wobei der Beschichter (14) vor dem Aufbringen einer Schicht um eine vorbestimmte Höhe angehoben und/oder abgesenkt wird.

10. Verfahren zum Herstellen eines dreidimensionalen Objekts (2) nach einem der Ansprüche 1 bis 9,
wobei der Belichter (15) vor seinem Verfahren über die Arbeitsebene angehoben und/oder abgesenkt wird.

11. Computerprogramm, das in eine programmierbare Steuereinheit (18) ladbar ist, mit Programmcodemitteln, um alle Schritte eines Verfahrens gemäß einem der Ansprüche 1 bis 10 auszuführen, wenn das Computerprogramm auf der Steuereinheit (18) ausgeführt wird.

12. Steuereinheit (18) für eine Vorrichtung (1) zum Herstellen eines dreidimensionalen Objekts (2) durch selektives schichtweises Verfestigen von Aufbaumaterial (13), wobei die Vorrichtung umfasst:
einen über eine Arbeitsebene (10) bewegbaren Beschichter (14) zum Aufbringen einer Schicht (31) des Aufbaumaterials (13) auf die Arbeitsebene (10) und
einen Belichter (15) zum selektiven Verfestigen der aufgebrachten Schicht (23) an Stellen, die einem Querschnitt des herzustellenden Objekts (2) entsprechen, durch Einbringen von Energie (16) mittels des Belichters (15),
wobei die Steuereinheit (18) ausgebildet ist, die Vorrichtung so zu steuern, dass sie
die Schritte des Aufbringens und des selektiven Verfestigens wiederholt, bis das Objekt (2) fertiggestellt ist,
den Schritt des Aufbringens für zumindest eine Schicht, bevorzugt eine Mehrzahl von Schichten und in besonders bevorzugter Weise für alle Schichten so durchführt, dass der Beschichter (14) zumindest zweimal über eine zu beschichtende Fläche fährt, ohne dass zwischendurch ein Einbringen von Energie (16) mittels des Belichters (15) erfolgt, **dadurch gekennzeichnet, dass** die Steuereinheit (18) weiterhin ausgebildet ist, die Vorrichtung (1) so zu steuern, dass sie
den Schritt des selektiven Verfestigens mittels eines zumindest zweimal über die zu belichtende Fläche fahrenden Belichters (15) durchführt, der eine zum Verfestigen des Aufbaumaterials (13) geeignete Strahlung aussendet.

13. Vorrichtung (1) zum Herstellen eines dreidimensionalen Objekts (2) durch selektives schichtweises Verfestigen von Aufbaumaterial (13), umfassend:
einen über eine Arbeitsebene (10) bewegbaren Beschichter (14) zum Aufbringen einer Schicht (23) des Aufbaumaterials (13) auf die Arbeitsebene (10) und
einen Belichter (15) zum selektiven Verfestigen der aufgebrachten Schicht (23) an Stellen, die einem Querschnitt des herzustellenden Objekts (2) entsprechen, durch Einbringen von Energie (16) mittels des Belichters (15),
wobei die Vorrichtung (1) ausgebildet und/oder gesteuert ist:
die Schritte des Aufbringens und des selektiven Verfestigens zu wiederholen, bis das Objekt (2) fertiggestellt ist,
den Schritt des Aufbringens für zumindest eine Schicht, bevorzugt eine Mehrzahl von Schichten und in besonders bevorzugter Weise für alle Schichten so durchzuführen, dass der Beschichter (14) zumindest zweimal über eine zu beschichtende Fläche fährt, ohne dass zwischendurch ein Einbringen von Energie (16) mittels des Belichters (15) erfolgt, **dadurch gekennzeichnet, dass** die Vorrichtung (1) weiterhin ausgebildet und/oder gesteuert ist
den Schritt des selektiven Verfestigens mittels eines zumindest zweimal über die zu belichtende Fläche fahrenden Belichters (15) durchzuführen, der eine zum Verfestigen des Aufbaumaterials (13) geeignete Strahlung aussendet.

14. Vorrichtung (1) gemäß Anspruch 13, bei der
der Belichter (20) gemeinsam mit dem Beschichter (14) über die Arbeitsebene (10) verfahrbar ist.

15. Vorrichtung (1) gemäß Anspruch 13, bei der
der Belichter (20) getrennt von dem Beschichter (14) über die Arbeitsebene (10) verfahrbar ist.

## Claims

1. A method for producing a three-dimensional object (2) by layer-wise applying and selectively solidifying a building material in powder form (13), comprising the steps of:
applying a layer (23) of the building material in powder form (13) by means of an application device (14) moving across a working plane (10),
selectively solidifying the applied powder layer (23) at positions that correspond to a cross-section of the object (2) to be produced by introducing energy (16) by means of an irradiation device (15) which emits a radiation suited to solidify the building material (13) and
repeating the steps of applying and selectively solidifying until the object (2) is completed,
wherein, for at least one layer, preferably a plurality of layers and particularly preferred all layers, the application step is carried out such that the application device (14) moves at least twice across an area to be coated without energy (16) being introduced by the irradiation device (15) in-between and
wherein, for at least one layer, preferably a plurality of layers and particularly preferred all layers, the step of selectively solidifying is carried out such that the irradiation device (15) moves at least twice across an area to be irradiated without new building material (13) being applied in-between.

2. The method according to claim 1, wherein the application device (14) applies a first powder sublayer (21) upon its first movement across the area to be coated and
applies a second powder sublayer (22) upon its second movement across the area to be coated.

3. The method according to one of claims 1 to 2, wherein the height of the application device (14) above the working plane (10) is changed before moving the application device (14) across the working plane (10).

4. The method according to one of claims 1 to 3, wherein, for at least one layer, preferably a plurality of layers and particularly preferred all layers, the step of selectively solidifying is carried out such that energy (16) is introduced at least twice by the irradiation device (15) without new building material (13) being applied in-between.

5. The method according to one of claims 1 to 4, wherein the height of the irradiation device (10) above the working plane is changed before moving the irradiation device (15) across the working plane.

6. The method according to one of claims 1 to 5, wherein the irradiation device (15) preheats the building material (13) without solidifying it upon its first movement across the area to be irradiated and
solidifies the building material (13) at those positions that correspond to the cross-section of the object (2) to be produced upon its second movement across the area to be irradiated.

7. The method according to one of claims 1 to 5, wherein the irradiation device (15) only partially solidifies the building material (13) at those positions that correspond to the cross-section of the object (2) to be produced upon its first movement across the area to be irradiated and
completely solidifies the building material (13) at those positions that correspond to the cross-section of the object (2) to be produced upon its second movement across the area to be irradiated.

8. The method according to one of claims 1 to 7, wherein the application device (14) and the irradiation device (15) are moved in such a way that an application process and an irradiation process take place simultaneously at different positions of the working plane.

9. The method for producing a three-dimensional object (2) according to one of claims 1 to 8, wherein the application device (14) is raised and/or lowered by a predetermined amount before applying a layer.

10. The method for producing a three-dimensional object (2) according to one of claims 1 to 9, wherein the irradiation device (15) is raised and/or lowered before being moved across the working plane.

11. A computer program which can be loaded into a programmable control unit (18), comprising program code means for executing all steps of a method according to one of claims 1 to 10 when the computer program is executed on the control unit (18).

12. A control unit (18) for a device (1) for producing a three-dimensional object (2) by selectively solidifying of a building material (13) layer by layer, the device comprising:
an application device (14) that can be moved across a working plane (10) for applying a layer (31) of the building material (13) to the working plane (10) and
an irradiation device (15) for selectively solidifying the applied layer (23) at positions that correspond to a cross-section of the object (2) to be produced by introducing energy (16) by means of the irradiation device (15),
wherein the control unit (18) is configured to control the device such that it
repeats the steps of applying and selectively solidifying until the object (2) is completed,
carries out the application step for at least one layer, preferably a plurality of layers and particularly preferred all layers such that the application device (14) moves at least twice across an area to be coated without energy (16) being introduced by the irradiation device (15) in-between,
**characterized in that** the control unit (18) is further configured to control the device (1) such that it
carries out the step of selectively solidifying by means of an irradiation device (15) that moves at least twice across the area to be irradiated, which irradiation device emits a radiation suited to solidify the building material (13).

13. A device (1) for producing a three-dimensional object (2) by selectively solidifying of a building material (13) layer by layer, comprising:
an application device (14) that can be moved across a working plane (10) for applying a layer (23) of the building material (13) to the working plane (10) and
an irradiation device (15) for selectively solidifying the applied layer (23) at positions that correspond to a cross-section of the object (2) to be produced by introducing energy (16) by means of the irradiation device (15),
wherein the device (1) is configured and/or controlled to:
repeat the steps of applying and selectively solidifying until the object (2) is completed,
carry out the application step for at least one layer, preferably a plurality of layers and particularly preferred all layers such that the application device (14) moves at least twice across an area to be coated without energy (16) being introduced by the irradiation device (15) in-between,
characterize in that the device (1) is further configured and/or controlled to carry out the step of selectively solidifying by means of an irradiation device (15) that moves at least twice across the area to be irradiated, which irradiation device emits a radiation suited to solidify the building material (13).

14. The device (1) according to claim 13, wherein the irradiation device (20) can be moved across the working plane (10) together with the application device (14).

15. The device (1) according to claim 13, wherein the irradiation device (20) can be moved separately from the application device (14) across the working plane (10).

## Revendications

1. Procédé de fabrication d'un objet (2) tridimensionnel par application couche par couche et solidification sélective d'un matériau de construction (13) pulvérulent comprenant les étapes suivantes :
application d'une couche (23) du matériau de construction (13) pulvérulent au moyen d'un dispositif de revêtement (14) se déplaçant au-dessus d'un plan de travail (10),
solidification sélective de la couche de poudre (23) appliquée à des endroits qui correspondent à une section transversale de l'objet (2) à fabriquer, par apport d'énergie (16) au moyen d'un dispositif d'exposition (15), qui émet un rayonnement adapté à la solidification du matériau de construction (13), et
répétition des étapes d'application et de solidification sélective, jusqu'à ce que l'objet (2) ait été achevé,
dans lequel l'étape d'application est exécutée pour au moins une couche, de préférence une pluralité de couches et de manière particulièrement préférée pour toutes les couches de sorte que le dispositif de revêtement (14) se déplace au moins deux fois au-dessus d'une surface à revêtir, sans qu'un apport d'énergie (16) ne s'effectue entre-temps au moyen du dispositif d'exposition (15), et
l'étape de solidification sélective est exécutée pour au moins une couche, de préférence une pluralité de couches et de manière particulièrement préférée pour toutes les couches, de sorte que le dispositif d'exposition (15) se déplace au moins deux fois au-dessus d'une surface à exposer, sans qu'un nouveau matériau de construction (13) ne soit appliqué entre-temps.

2. Procédé selon la revendication 1, dans lequel le dispositif de revêtement (14)
applique une première couche partielle de poudre (21) au-dessus de la surface à revêtir lors de son premier déplacement et
applique une deuxième couche partielle de poudre (22) au-dessus de la surface à revêtir lors de son deuxième déplacement.

3. Procédé selon l'une quelconque des revendications 1 à 2, dans lequel
la hauteur du dispositif de revêtement (14) au-dessus du plan de travail (10) est modifiée avant le déplacement du dispositif de revêtement (14) au-dessus du plan de travail (10).

4. Procédé selon l'une quelconque des revendications 1 à 3, dans lequel
l'étape de solidification sélective est exécutée pour au moins une couche, de préférence une pluralité de couches et de manière particulièrement préférée pour toutes les couches, de sorte que l'apport d'énergie (16) au moyen du dispositif d'exposition (15) s'effectue au moins deux fois, sans qu'un nouveau matériau de construction (13) ne soit appliqué entre-temps.

5. Procédé selon l'une quelconque des revendications 1 à 4, dans lequel
la hauteur du dispositif d'exposition (10) au-dessus du plan de travail est modifiée avant le déplacement du dispositif d'exposition (15) au-dessus du plan de travail.

6. Procédé selon l'une quelconque des revendications 1 à 5, dans lequel le dispositif d'exposition (15)
préchauffe le matériau de construction (13), sans le solidifier, pendant son premier déplacement au-dessus de la surface à exposer, et
solidifie le matériau de construction (13) aux endroits correspondant à la section transversale de l'objet (2) à fabriquer lors de son deuxième déplacement au-dessus de la surface à exposer.

7. Procédé selon l'une quelconque des revendications 1 à 5, dans lequel le dispositif d'exposition (15)
solidifie uniquement partiellement le matériau de construction (13) aux endroits correspondant à la section transversale de l'objet (2) à fabriquer lors de son premier déplacement au-dessus de la surface à exposer et
solidifie entièrement le matériau de construction (13) aux endroits correspondant à la section transversale de l'objet (2) à fabriquer lors de son deuxième déplacement au-dessus de la surface à exposer.

8. Procédé selon l'une quelconque des revendications 1 à 7, dans lequel
le dispositif de revêtement (14) et le dispositif d'exposition (15) sont déplacés de sorte qu'un processus de revêtement et un processus d'exposition ont lieu simultanément à différents endroits du plan de travail.

9. Procédé de fabrication d'un objet (2) tridimensionnel selon l'une quelconque des revendications 1 à 8,
dans lequel le dispositif de revêtement (14) est soulevé et/ou abaissé d'une hauteur prédéfinie avant l'application d'une couche.

10. Procédé de fabrication d'un objet (2) tridimensionnel selon l'une quelconque des revendications 1 à 9,
dans lequel le dispositif d'exposition (15) est soulevé et/ou abaissé avant son déplacement au-dessus du plan de travail.

11. Programme informatique, qui peut être chargé dans une unité de commande (18) programmable, comprenant des moyens de code de programme, afin d'exécuter toutes les étapes d'un procédé selon l'une quelconque des revendications 1 à 10, lorsque le programme informatique est exécuté sur l'unité de commande (18).

12. Unité de commande (18) pour un dispositif (1) de fabrication d'un objet (2) tridimensionnel par solidification couche par couche sélective d'un matériau de construction (13), dans lequel le dispositif comprend :
un dispositif de revêtement (14) mobile au-dessus d'un plan de travail (10) pour appliquer une couche (31) du matériau de construction (13) sur le plan de travail (10) et
un dispositif d'exposition (15) pour la solidification sélective de la couche (23) appliquée à des endroits qui correspondent à une section transversale de l'objet (2) à fabriquer, par apport d'énergie (16) au moyen du dispositif d'exposition (15),
dans laquelle l'unité de commande (18) est réalisée pour commander le dispositif de sorte qu'elle
reproduit les étapes d'application et de solidification sélective jusqu'à ce que l'objet (2) ait été achevé,
exécute l'étape d'application pour au moins une couche, de préférence une pluralité de couches et de manière particulièrement préférée pour toutes les couches, de sorte que le dispositif de revêtement (14) se déplace au moins deux fois au-dessus d'une surface à revêtir, sans qu'un apport d'énergie (16) au moyen du dispositif d'exposition (15) ne s'effectue entre-temps, **caractérisée en ce que** l'unité de commande (18) est réalisée en outre pour commander le dispositif (1), de sorte qu'elle
exécute l'étape de solidification sélective au moyen d'un dispositif d'exposition (15) se déplaçant au moins deux fois au-dessus de la surface à exposer, qui émet un rayonnement adapté à solidifier le matériau de construction (13).

13. Dispositif (1) de fabrication d'un objet (2) tridimensionnel par solidification couche par couche sélective d'un matériau de construction (13), comprenant :
un dispositif de revêtement (14) mobile au-dessus d'un plan de travail (10) pour l'application d'une couche (23) du matériau de construction (13) sur le plan de travail (10) et
un dispositif d'exposition (15) pour la solidification sélective de la couche (23) appliquée à des endroits qui correspondent à une section transversale de l'objet (2) à fabriquer, par apport d'énergie (16) au moyen du dispositif d'exposition (15),
dans lequel le dispositif (1) est réalisé et/ou commandé :
pour répéter les étapes d'application et de solidification sélective jusqu'à ce que l'objet (2) ait été achevé,
pour exécuter l'étape d'application pour au moins une couche, de préférence une pluralité de couches et de manière particulièrement préférée pour toutes les couches, de sorte que le dispositif de revêtement (14) se déplace au moins deux fois au-dessus d'une surface à revêtir, sans qu'un apport d'énergie (16) au moyen du dispositif d'exposition (15) ne s'effectue entre-temps, **caractérisé en ce que** le dispositif (1) est réalisé et commandé en outre
pour exécuter l'étape de solidification sélective au moyen d'un dispositif d'exposition (15) se déplaçant au moins deux fois au-dessus de la surface à exposer, qui émet un rayonnement adapté à solidifier le matériau de construction (13).

14. Dispositif (1) selon la revendication 13, dans lequel
le dispositif d'exposition (20) est déplaçable conjointement avec le dispositif de revêtement (14) au-dessus du plan de travail (10).

15. Dispositif (1) selon la revendication 13, dans lequel
le dispositif d'exposition (20) est déplaçable au-dessus du plan de travail (10) séparément du dispositif de revêtement (14).
